# EUROPEAN PATENT APPLICATION

(11) **EP 2 210 478 A1**
(43) Date of publication of application: **28.07.2010**
(21) Application number: 10151619.3
(22) Date of filing: 26.01.2010
(51) Int. Cl.: A01G 9/00, A01G 31/02

(54) **Cultivation method for plants and system and substrate box for cultivating plants**

(30) Priority: 26.01.2009 FI 20095062
(71) Applicant: Kekkilä OY, 04300 Tuusula (FI)
(72) Inventor: Tahvonen, Risto, 21500, PIIKKIÖ (FI); Särkkä, Liisa, 20660, LITTOINEN (FI); Näkkilä, Juha, 20780, KAARINA (FI); Aksola, Kimmo, 29100, LUVIA (FI); Mäkitalo, Teuvo, 26660, RAUMA (FI); Jokinen, Kari, 00350, HELSINKI (FI)
(74) Representative: Helke, Kimmo Kalervo

(57) **Abstract**

In the cultivation method for plants grown in a greenhouse or similar space at least the lower part of the substrate (1) of the plants is divided into at least two parts (7a, 7b) isolated from each other laterally. Part of the roots (12a) of the plants is allowed to grow in the first part (7a) of the substrate and the second part of the roots of the plants (12b) is allowed to grow in the second part (7b) of the substrate. Fertilizer irrigation of these substrate parts is performed separately for both parts of the substrate, in such a way that one substrate part (7b) is fertilized with a strong fertilizer solution and the other (7a) with a substantially weaker fertilizer solution. The fertilizer is regulated according to the irrigation requirement and assimilation is prevented from being interrupted due to insufficient fertilizer irrigation.

## Description

The present invention relates to a cultivation method for plants grown in a greenhouse or similar space, particularly for greenhouses. The invention also relates to a cultivation system and substrate box applying the method.

In greenhouse cultivation, a plant takes both the water and the nutrients it needs from the same solution. The irrigation nutrient solution's total salt content is of very great significance for the water uptake of the plant. The osmotic value of the water of the substrate determines the ease with which the plant can obtain water. The salt content of the substrate should therefore vary on the basis of the season, i.e. in practice of the total radiation received by the plants. Because a plant takes all other nutrients than calcium and magnesium by active root work, the capacity of plant roots to take nutrients is of decisive importance to the growth of a plant.

A plant must also receive sufficient water during the entire period of daylight, as the evaporation from plants is an important factor in the cooling of plant leaves and in obtaining carbon dioxide. The amount of water received by plants will drop exponentially, if the total amount of main nutrients nitrogen and potassium in the substrate increases.

In traditional greenhouse cultivation, it has not been possible to regulate the plants' uptake of water and nutrients sufficiently effectively. Because a heavy use of fertilizer (conductivity of fertilizer 5 - 6 mS/cm) reduces a plant's ability to take water for itself, and a light use of fertilizer (conductivity about 1 mS/cm) on the other hand favours the ability of the plant to take water, different cultivation conditions, e.g., strong/weak solar radiation, demand special regulation of fertilizer for plants. Previously, this has not been possible without extensive special arrangements. Generally, the conductivity (osmotic value) of a strong fertilizer solution is many times that of a weak solution.

Some scientific publications describe dividing the substrate into two parts and fertilizing these parts with different strengths, i.e. nutrient contents, which is called the split root technique. In the articles Sonneveld & Kreij 1999, Plant and Soil 209: 47 - 56 and Sonneveld & Voogt 1990, Plant and Soil 124: 251 - 256, cultivation took place in natural light in rockwool by dividing the roots into two isolated parts. The parts were irrigated with different strengths, which were further strengthened using table salt to increase conductivity. Irrigation took place by continuous irrigation, by circulating the excess water back into a collector tank, from where it was returned to the plants after receiving an addition of fertilizer and water. Cultivation of this type was closer to circulating water cultivation, i.e. hydroponics. The supplementing of the nutrients in the circulating water took place once a week, on the basis of analyses. Tomatoes did not increase in yield while with cucumbers the yields dropped, if both sides were fertilized with a very strong solution (5 - 6 mS/cm). Otherwise no significant changes in yield took place. Some of the experiments were destroyed by root diseases. However, in these experiments it was possible to ascertain that the absorption of water by the plants was divided, in such a way that the plants took most of the water they needed from the weak solution. These experiments have not led to practical cultivation applications.

Generally, the term hydroponics refers to the cultivation of plants directly in a nutrient solution, in which case a medium that supports the plants is required.

The split-root technique is generally used as a botanical research method, in which part of the roots are isolated in their own space, making it possible to investigate scientifically, for instance, the effects of placement fertilization and other factors, such as the nutrient concentration of the substrate/field, and the effects of individual nutrients, on the growth of plants.

The invention is intended to create a method, in which the roots of plants are guided, in an manner that is, as such, known, to grow into two parts isolated from each other, while the conditions for growth are improved in order to increase the yield, in which case the total amount of irrigation is arranged relative to the radiation energy in such a way that at no stage is assimilation interrupted due to insufficient fertilizer irrigation. More specifically, characteristics of the method according to the invention are stated in Claim 1 while the characteristics of the system exploiting the method are stated in Claim 13. The aim of the invention is achieved by using better irrigation monitoring and regulation than in the prior art. With the aid of the invention, large differences in radiation can be exploited by altering the frequency of irrigation, but without other special arrangements. It is apparent that Sonneveld did not observe the yield increase as being due particularly to deficient fertilizer irrigation. When using rockwool, fertilizer irrigation is much more liable to disturbances than when using horticultural peat, so that random factors may have affected the results. Horticultural peat, especially natural pale horticultural peat, has good properties, which are an advantageous porous structure, good water-retention ability, and an excellent cationic exchange capacity, i.e. nutrient-retention ability. Cultivated sphagnum moss has most of the properties of peat.

The invention can also be applied in a hydroponics method, the characteristic features of which are stated in Claim 12.

The invention is especially advantageous in greenhouse cultivation, when an increased carbon-dioxide content (at least 800 ppm), i.e. carbon-dioxide fertilization and/or a raised temperature, can be used during daylight.

The method according to the invention is preferably applied in such a way that the said substrate parts are of more or less the same size. Thus, the cultivation results of both substrates will generally be similar and the combined result maximized.

The method according to the invention is particularly suitable for application in intensive cultivation, in which the plants are illuminated not only by natural light but also by artificial light. The plants' water requirement will then be great and the plants will grow very effectively. When grown in this way, greenhouse cucumbers, for example, have an illuminated growing time each day of about 20 hours. It is under precisely such intensive cultivation that the advantages provided by the invention can be best exploited.

In practice, the method according to the invention is preferably applied by placing the plants' substrate parts in a substrate box, with partition which divides the plants' roots into two parts, one of which can grow on one side of the partition and the other on the other side of the partition. The partition can advantageously act, e.g., as a support for a growing block, in such a way that the growing block is placed on top of it, so that the roots of the growing plant will divide into two parts on each side of the partition. The partition separates from each other the parts of the substrate box to be fertilized differently and gives to plant's roots an opportunity to benefit optimally from both the strong and the weak fertilizer solutions. The total amount of the fertilizer irrigation is regulated relative to the irrigation requirement of the plants, so that at no stage is assimilation interrupted due to insufficient fertilizer irrigation (fertigation). The irrigation requirement is measured either indirectly from the radiation energy received by the plants, or directly from the moisture content of the substrate, e.g., using a tensiometer.

Generally, both sides are irrigated simultaneously, so that the substrate's salt contents will remain within the controlled limits, thus ensuring the nutrient economy of the plants. On the other hand, a more precise result will be obtained by measuring the moisture content from both sides separately and regulating them independently of each other.

Generally, the first part of the substrate is fertilized with a strong, 2,5 - 5,5 mS/cm irrigation fertilizer solution and the second with a substantially weaker, 0,8 - 1,6 mS/cm irrigation fertilizer solution. On average, irrigation takes place 0,4 - 5 times a day for each kWh/m² unit of radiation power, in such a way that there will be 0 - 30 % over watering. In Finnish conditions, this means 2 - 25 times a day, averaging 15 times a day during summer.

In the method according to the invention, the dosing of water and fertilizers into the substrate parts is regulated according to the prevailing weather conditions. This is important, as the strength of the irrigation fertilizer solution is of great significance for the water uptake of the plant and because, on the other hand, the plant must receive sufficient water when there is strong solar radiation.

The controlled irrigation is generally performed as over-watering, in which water always drains out of the substrate after irrigation (0 - 30 %), so that the moisture content of the substrate always settles to the typical field capacity of the substrate used and the ion content of the substrate remains constant. The amount for each irrigation is then typically 5 - 20 % of the capacity of the substrate. Using rockwool, the range is 5 - 10 % and with horticultural peat 8 - 20 %.

The invention also relates to a substrate box intended to apply the aforementioned method, with the aid of which two separate parts of the substrate can be easily formed, so that they can be irrigation fertilized separately. The characteristics of the substrate box are stated in Claim 10. There are preferably substrates, such peat boards, ready in the substrate box.

According to the invention, the substrate box preferably forms a space equipped with a watertight partition, in which the partition is dimensioned to allow part of the roots of the plants to grow on one side of the partition and part on the other side, if the substrate box is filled with substrate to at least the height of the partition. The tray can also be used for traditional cultivation, in which case both halves of the tray will receive similar irrigation.

If the substrate box according to the invention is shaped in such a way that the partition is clearly lower than the outer walls of the tray, this will achieve the advantage that a growing block placed on top of the partition will be sufficiently low in the substrate box and will thus remain firmly in place. At the same time, the position of the root part relative to the irrigation spaces on both sides of the partition will be advantageous and the roots can easily grow on both sides of the partition.

The growth of the roots is particularly strong on the side of the strong nutrient solution. In one variation of the invention, the sides for strong and weak fertilizer irrigation are switched once or more during a growing season, when the roots that were previously on the weak side will grow rapidly with the strong nutrient solution. It is obvious that, at least with some plants, such a mutual change of sides will produce an optimal result.

In one group of applications, there are different substrates in the different portions of the double substrate box, for example, rockwool (or some other inert material) on the weak side to provide water, and horticultural peat on the strong side for nutrient provision.

In the following, the invention is described in greater detail with reference to the accompanying schematic drawings, in which
- Figure 1: shows how the method according to the invention can be applied in a simple manner,
- Figure 2: shows a substrate box suitable for applying the method according to the invention,
- Figure 3: shows, as a cross-section, how the roots of a plant divide into two parts in the substrate box according to Figure 2, together with one preferred irrigation regulating system, and
- Figure 4: shows the application of the invention in connection with hydroponics.

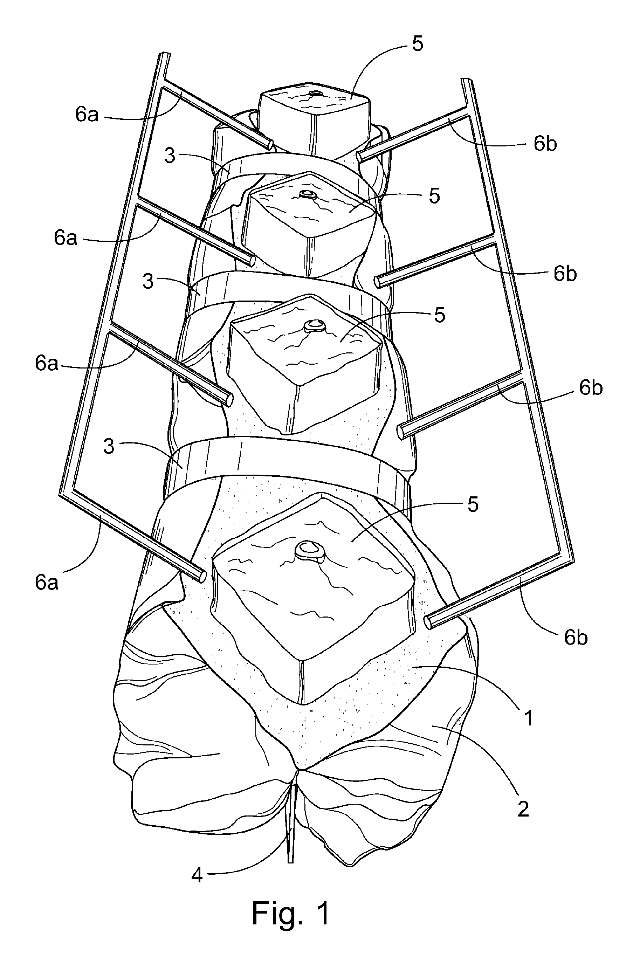

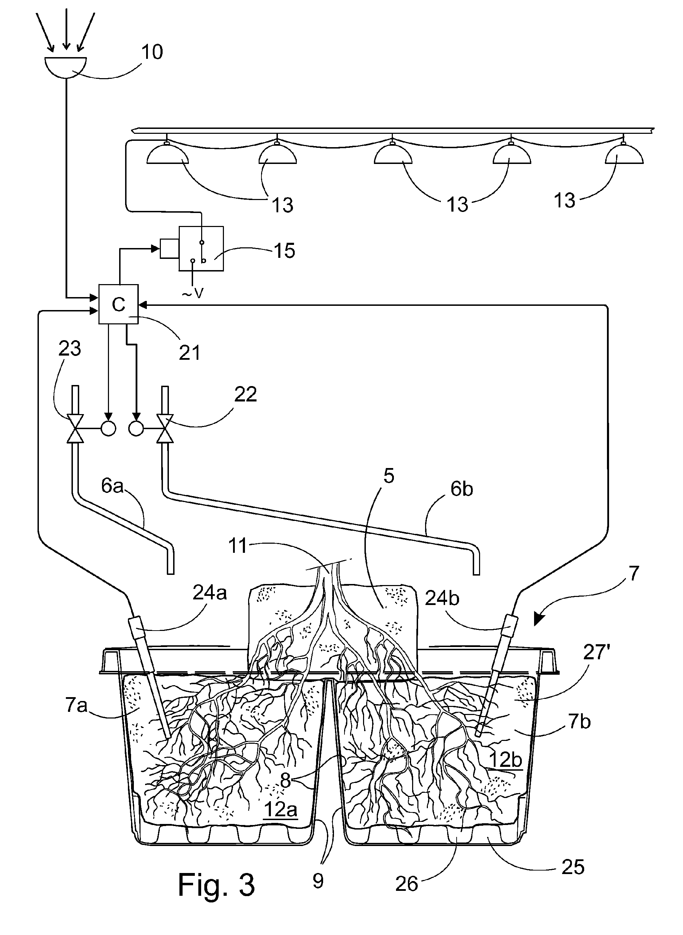

According to Figure 1, the substrate 1 of the plants being cultivated is enclosed in an elongated, e.g., plastic substrate sack 2. The substrate 1 in the substrate sack can contain soil, peat, or coir, and also an inactive substance, such as rockwool or perlite. The composition of the substrate is selected to suit the plants being cultivated. An irrigation system suitable for this is described hereinafter, in connection with Figure 3.

The substrate sack 2 is cut open longitudinally along its upper surface, and tapes or flexible bands 3 are placed around it, so that the bag will not open too much laterally. To create the substrate according to the invention, the substrate sack 2 is placed on top of a relatively thin vertical support 4, in such a way that the vertical support is in the middle of the bag and parallel to the longitudinal axis of the bag. The vertical support 4 can be simply a separate board (e.g., a plywood strip) or, for example, a frame set in the ground, in order to shape the bag. Due to gravity, the parts of the cut-open substrate bag at the sides of the vertical support press towards the ground in the manner shown in Figure 1, so that the lower part of the substrate 1 divides into two parts, between which the vertical support 4 remains, the vertical support 4 and the bottom of the substrate sack folded over it, which remain between the two parts, isolate these parts from each other laterally.

If the vertical board 4 is only a separate board, its remaining upright in the manner shown in Figure 1 while the substrate sack 2 is being set up can be facilitated by dimensioning the board to be somewhat longer than the substrate sack. The board will then immediately gain a firm hold on the substrate sack 2 in the setting-up stage. After this, the weight and stiffness of the substrate sack will almost certainly keep the vertical support 4 in the correct position.

A number of growing blocks 5 are placed in the upper part of the substrate 1 in the substrate sack 2, or the plants to be cultivated are planted in it in some other way. Here, the growing block 5 can comprise a block with a seed. At this stage, the entire seedling or plant is mostly above the vertical support 4, but in a relatively short time its roots will grow downwards and divide on both sides of the vertical support. The first side of the substrate sack 2 is irrigated with a weak fertilizer solution through the tubes 6a while the second side is irrigated with a strong fertilizer solution through the tubes 6b. In this way, the cultivation principle according to the invention is implemented in a simple manner.

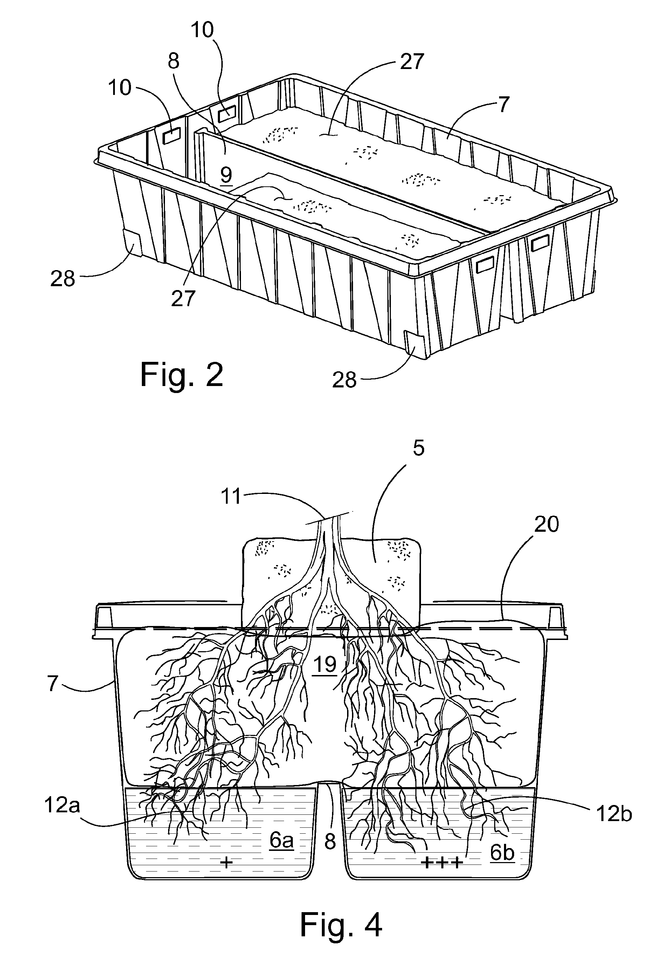

Figure 2 shows a substrate box 7 suitable for applying the method according to the invention, with each half filled with a dry peat board 27. Naturally, some other reasonably rigid substrate slab can be used. The peat board on one side is partly cut away, in order to show the partition 9. The substrate box is formed of, for example, a plastic box, in the bottom of which is an upward pointing relatively high ridge 8, forming a partition 9 in the lower part of the tray 7 (Figure 3). The partition 9 is clearly lower than the outer walls of the tray 7. In the lower corners of the tray's end wall, there are easily openable overflow openings 10, while there are water-outlet holes 28 in the bottom. The overflow openings 10 are intended to ensure that the over-watering solution according to the normal irrigation method will travel to the separate sides of the tray, so that the irrigation waters cannot mix with each other. According to Figure 3, there are protrusions 25 or other structures in the bottom of the tray, in order to form an air space 26 under the substrate 27 supported by these structures. Excess water also exits through the air space 26, but its greatest significance is that, with its aid, the root growth receives air. This is important for the welfare of the plant.

The substrate box can be elongated, in which case it is more accurate to refer to a channel or trough. In that case, the method will also be suitable for hydroponics taking place in cultivation troughs.

The substrate box 7 according to Figure 2 permits plants to be planted rapidly, once the peat boards 27 have been irrigated and have swollen to the height of the partition. One substrate box according to Figure 2 and 3 has internal dimensions of 48 cm x 28 cm (viewed from above). A peat board sized 48 cm x 13 cm is placed in both halves, on top of the bottom protrusions.

Making the partition 9 in the form of a ridge 8 formed on the bottom of the substrate box 7 gives the advantage that the partition will be watertight, because it is part of the bottom structures. On the other hand, if the partition is a separate element, which is placed on the bottom of a box-like vessel, its joints with the bottom and side walls will not be as certain to be watertight.

Figure 3 shows a cross-section of the substrate box 7, as well as a typical system for regulating fertilizer irrigation. The substrate box 7 is filled to the very top with substrate and a growing block 5 can be seen in it, which is placed on top of the bottom ridge 8 of the tray. In this case, the substrate is a peat board 27', which has swollen as a result of irrigation. The same-sized lower parts 7a and 7b of the substrate box are filled with a suitable substrate. After some time, the plant 11 in the growing block, i.e. the seedling, of which Figure 3 shows only the lower part, begins to grow roots on both sides of the partition 9, as shown in the figure. The roots 12a on the left-hand side of the partition 9 and the substrate surrounding them are irrigated with a weak fertilizer solution through the tube 6a while the roots 12b on the right-hand side of the partition 9 and the substrate surrounding them are irrigated with a strong fertilizer solution through the tube 6b.

As the cultivation method according to the invention is particularly suitable for intensive cultivation on a peat substrate, in which the plants are also illuminated by artificial light, this form of cultivation is illustrated in Figure 3 by showing schematically lights 13 for artificial lighting. An opaque plastic membrane (not shown), which covers the surface of the substrate, is attached to both outer edges of the substrate box. The width of the plastic membrane is such that a planting hole about 10-cm wide remains for the growing block, in which the plants to be planted can be placed at freely selectable intervals.

The dosing of water and fertilizers into the parts 7a and 7b of the substrate box is regulated according to the prevailing weather conditions and the plant species, with the aid of the control system described hereinafter, because the strength of the fertilizer water is of great significance to the water uptake of the plant and because, on the other hand, the plant must receive sufficient water when solar radiation is strong. Because the plant grows rapidly in strong light, it also requires a great amount of nutrients, which are taken mainly from the strongly fertilized part, so that the availability of both nutrients and water is ensured during times of plentiful radiation.

In this example, the regulating system includes tensiometers 24a and 24b, a controller 21, and valves 22, together with operating devices, controlling irrigation. The controller 21 is programmed to create an irrigation frequency adjusted to the radiation level. The tensiometers 24a and 24b regulate irrigation precisely and independently of each other. Alternatively, or in addition, it is possible to use radiation sensors 10 to measure the irrigation requirement and to control the artificial light. In that case, the same controller 21 will also control the lights 13 through a power switch 15.

In Figure 4, the invention is applied to hydroponics. In the substrate box 7, there are two troughs 6a and 6b, which are separated from each with the aid of bottom ridge 8. The troughs 6a and 6b are at a slightly tilted attitude, so that the fertilizer solutions (weak '+' and strong '+++') flow slowly past the roots 12a and 12b. A peat block 19, through which the roots of the plant 11 grow into the troughs 6a and 6b, is placed on top of the troughs 6a and 6b, supported by the ridge 8a and the sides of the substrate box 7. In this case, automatic irrigation is achieved without actual moisture-regulating devices, as long as the selected nutrient equilibrium is maintained in the troughs 6a and 6b.

Several of the features described above can also be applied to hydroponics, either separately or as selected combinations, such as the use of artificial light, carbon-dioxide fertilization, and the switching of the sides.

### Cultivation experiments in 2008

In 2008, two completely identical experiment series using the split-root technique were arranged. The first experiment series was from winter to early spring and the second from later spring to early autumn. Identical experiments were repeated simultaneously both in a cooled greenhouse and in a normally ventilated greenhouse. The initial hypothesis was that, in the even lighting conditions of winter, when plants can never be stressed by high temperature and excessive sunlight, the growth result of divided fertilization would be the same as in traditional cultivation. On the other hand, in summer, when temperature and solar radiation vary greatly, and sometimes stress plants, a significantly higher yield should be obtained using the split-root technique than with normal fertilizer irrigation. The size of both test greenhouses was 130 m², so that the cultivation conditions resembled those of commercial production, but otherwise followed scientifically accepted field methods with 6 repetitions.

In the first split-root experiment, the increase in yield was 0 - 5 % more than conventional. The difference was not statistically significant. The split-root plants took 30 % of the water they used from the strong trough and the rest from the weak side. This result was completely identical with the summer experiment. For this reason, the methods and results are only described from the summer experiment.

### Experimental arrangements

Substrate: Kekkilä® vegetable board (100 * 20 * 9 cm). The substrate volume was about 4,5 1 per plant.

Experiment members: Conventional substrate, in which there was one drip-irrigation nozzle per plant, and a divided substrate, in which the vegetable board was split longitudinally and plywood and plastic was placed between the halves. The seedling was given its own drip-irrigation nozzle on both halves of the substrate. The seedling rooted evenly in both halves of the substrate. After planting, the substrate was covered with black plastic film, to prevent the evaporation of water from the surface of the substrate similarly from the different test members. The experiment was implemented in both a compartment equipped with conventional ventilation openings and in a cooled compartment, in which there was a cooling device and ventilation openings. The irrigation was controlled by a timer: A strong solution (target 5 mS/cm) was added to one half of the divided substrate and a weak solution (target 1 mS/cm) to the other. Over-watering target: 10 % on the strong half of the divided substrate and 20 % on the weak half, unified substrate 20 %. Variety Cumuli. Planting density 2,3 plant/m². Installation output of artificial light about 170 W/m², photosynthetically active radiation about 200 µmol m²/s at a height of 80 cm. Lamps installed using so-called interval-lighting method. Substrate trough 10 cm and lowering bar at 340 cm above ground level. Planting took place on 3 June and harvesting 5 times a week from 19 June to 28 August. The other details affecting the test conditions are in Figures 1 and 3.

Both halves were irrigation-fertilized independently and the over-watering solution flowed into channels in the edges of the trough, without mixing with each other. The amounts of over-watering were determined from separate measuring points, so that the amounts of liquid taken by the plants could be calculated. Tensiometers were used to determine the moisture state of the substrate as a continuous measurement, so that the times between watering were changed on the basis of the consumption of water.

Very comprehensive growth and condition measurements were made of the test conditions and the plants, so that it was possible to determine precisely, among other things, the amounts of water and nutrients given to the plants, the amounts of water used by the plants, the total radiation received by the plants, and diverse yield components (yield, quality of yield, the plant's phenology), and the root structure.

### Results and examination of the results

The new split-root method increased statistically significantly the total yield and the first-class yield compared to uniform fertilizer irrigation (Table 2). The increase in yield started already from the second week of harvest. The increase in yield was statistically highly significant measured both by weight and by number of fruits. A yield increase was obtained in both the ventilated and the cooled compartments. The average weekly yields (full harvesting weeks) in the uniform and divided substrates in the ventilated greenhouse were 2,5 and 2,9 kg/m² and in the cooled greenhouse correspondingly 3,2 and 3,6 kg/m². Typically, about 60 - 70 % of the water used by the plants in the divided substrate was from the weakly fertilized substrate and the rest from the strongly fertilized substrate. The difference between the roots in the uptake of water and nutrients took place 3 weeks after planting, up until when the water uptake took place evenly from both fertilizer compartments. During the period of the strongest solar radiation, about 80 % of the water used by a plant came from the weak substrate. In the cooled greenhouse, the water uptake from the weak substrate-half followed the whole time the changes in radiation, so that it was no longer possible to attest to the evaporation deficit described by Puustjärvi (Kasvuturve ja sen käyttö *[Horticultural peat and its use],* p. 105, 1973). The roots of the plants were extremely strong in the part of the substrate receiving the strong fertilizer solution, compared to the substrate receiving weak solution, as in the experiment carried out in autumn.

**Table 2. Yield results in cooled and ventilated greenhouses (Control) and their statistical significance.**

| *Yield*/*m²* | *Cooling* | | *Control* | | *Statistical* | | *Same substrate in different compartment* | | *Different substrate in same compartment* | |
|---|---|---|---|---|---|---|---|---|---|---|
| | *Substrate type* | | *Substrate type* | | **significance** | | *Substrate type* | | *Compartment* | |
| | *Unif.* | *Divid.* | *Unif.* | *Divid* | *Comp.* | *Subs.* | *Unif.* | *Divid.* | *Cooled* | *Control* |
| *1^{st} cl. kg* | *27.5* | *32.4* | *19.7* | *23.9* | *** | *** | *** | *** | *** | ** |
| *2^{nd} cl. kg* | *1.1* | *0.7* | *1* | *0.8* | *ns* | *ns* | - | - | - | - |
| *light kg* | *0.4* | *0.2* | *0.8* | *0.4* | - | - | - | - | - | - |
| *other kg* | *2.0* | *1.8* | *2.6* | *2.1* | * | *ns* | * | *ns* | *ns* | *ns* |
| *total yield kg* | *31.0* | *35.3* | *24.1* | *27.3* | *** | *** | *** | *** | *** | *** |
| *1^{st} cl. item* | *73.7* | *85.9* | *57.1* | *67.9* | *** | *** | *** | *** | *** | ** |
| *2^{nd} cl. item* | *3.4* | *2.3* | *3.2* | *2.5* | *ns* | *ns* | - | - | - | - |
| *light item* | *1.5* | *1.2* | *3.6* | *1.8* | - | - | - | - | - | - |
| *other item* | *7.1* | *6.5* | *9.4* | *7.8* | * | *ns* | * | *ns* | *ns* | *ns* |
| *total yield item* | *85.1* | *95.8* | *73.2* | *80.0* | ***** | **** | ***** | ***** | **** | *** |
| *fruit weight g* | *374* | *379* | *346* | *352* | ***** | *** | ***** | ***** | *(*)* | *** |

| | | | | | | | | | | |
|---|---|---|---|---|---|---|---|---|---|---|
| *_*** statistically significant, ns not statistically significant - no statistical analysis made | | | | | | | | | | |

The invention is not restricted to the embodiments described, but instead several variations of the invention can be envisaged within the scope of the accompanying Claims. The division of the substrate into three parts, for which irrigation fertilization in three strengths is arranged, can be exploited industrially. Such an arrangement may provide a practicable way of circulating the parts.

## Claims

1. Cultivation method particularly for plants grown in a greenhouse or similar space, in which the plants are cultivated mainly with the aid of natural light, i.e. solar radiation, in a substrate, into which the plants (11) grows its roots, and at least the lower part of the substrate (1) of the plants is divided into at least two parts (7a, 7b) isolated from each other laterally, in such a way that part of the roots (12a) of the plants is allowed to grow in the first part (7a) of the substrate and the second part of the roots of the plants (12b) is allowed to grow in the second part (7b) of the substrate, and that fertilizer irrigation of the substrate parts is performed separately for both parts of the substrate by means of fertilizer irrigation solutions, which have a different strength, **characterized in that** high-energy periods of solar radiation are exploited and the total irrigation amount is arranged relative to the radiation power in such a way that assimilation is not interrupted at any stage due to insufficient fertilizer irrigation.

2. Method according to Claim 1, **characterized in that** a variable proportional to the need for fertilizer irrigation is measured and the irrigation frequency is controlled automatically on the basis of this measured variable.

3. Method according to Claim 2, **characterized in that** the said variable is the radiation power of natural light.

4. Method according to Claim 2, **characterized in that** the said variable is the moisture content of the substrate.

5. Method according to any of Claims 1 - 4, **characterized in that** the first substrate part (7b) is fertilized with a strong, 2,5 - 5,5 mS/cm irrigation fertilizer solution and the second (7a) with a substantially weaker, 0,8 - 1,6 mS/cm irrigation fertilizer solution.

6. Method according to any of Claims 1 - 3, **characterized in that** there are in one day on average 0,4 - 5 irrigation times for each kWh/m² unit of radiation power, in such a way that there will be 0 - 30 % over-watering.

7. Method according to any of Claims 1 - 3, **characterized in that** at least one substrate is natural pale sphagnum peat, or cultivated sphagnum moss.

8. Method according to any of Claims 1 - 7, **characterized in that** the substrate parts (7a, 7b) are of different materials.

9. Method according to any of Claims 1 - 8, **characterized in that** the method is suitable for year-round intensive cultivation, in which the plants are illuminated during periods of little natural light with not only natural light, but also with strong artificial light (13) of more than 150 W/m², if the radiation of the natural light is less than 200 W/m².

10. Method according to any of Claims 1 - 9, **characterized in that** the carbon-dioxide content is increased artificially to at least 800 ppm during periods of daylight.

11. Method according to any of Claims 1 - 10, **characterized in that** the fertilizer irrigation is switched at least once during the growing season between strong and weak fertilizer irrigation.

12. Hydroponic cultivation method particularly for plants grown in a greenhouse or similar space, in which the plants (11) are cultivated mainly with the aid of natural light, i.e. solar radiation, each plant being in a sturdy substrate (19) as well as in a fertilizer water space (6a, 6b) beneath it, into which the plant is arranged to grow its roots, **characterized in that** the fertilizer water space and roots are divided into at least two parts (6a, 6b) isolated from each other, in which in the parts of the fertilizer water space different fertilizer strengths are used, in such a way that the first root part receives a weak (6a) fertilizer solution and the second part a strong (6b) fertilizer solution.

13. System for cultivating plants growing particularly in a greenhouse or corresponding space, which system includes
- a substrate divided laterally into two parts (7a, 7b) isolated from each other, separating the roots of the plant into a first and a second part,
- feed means (21, 22, 6a, 6b) for fertilizer irrigation solutions, arranged to feed the selected solutions to each part at a selected frequency,
**characterized in that** the system further comprises
- a sensor (24a, 24b) for measuring a variable proportional to the fertilizer irrigation requirement,
- regulating means (21) and operating devices (22, 23) for regulating the irrigation frequency automatically on the basis of this measured variable.

14. System according to Claim 13, **characterized in that** the two-part substrate is formed of a substrate sack (2) cut open on top longitudinally and of a vertical support (4) set under it arranged to divide the substrate sack (2) into essentially two independent parts.

15. Substrate box (7) intended to apply the method according to Claim 1, in which there is a partition (9) for dividing the space delimited by the substrate box into two parts, in such a way that part (12a) of the roots of the plants is allowed to grow on the first side of the partition (9) and part (12b) on the second side of the partition (9), **characterized in that** on both sides the bottom of the substrate box (7) includes structures for forming a air space under the substrate supported by these structures, and the substrate box further includes at least one water-outlet hole (28) in connection with the said air space.
